# EUROPEAN PATENT SPECIFICATION

(11) **EP 0 672 575 B1**
(45) Date of publication and mention of the grant of the patent: **22.04.1998**
(21) Application number: 95200230.1
(22) Date of filing: 31.01.1995
(51) Int. Cl.: B62D 21/18

(54) **Two-seater car, basically for town runs**
Zweisitzer-Wagen, grundsätzlich für Stadtfahrten
Voiture à deux places, précisément pour trajets en ville

(30) Priority: 15.03.1994 IT TO940050 U
(43) Date of publication of application: 20.09.1995
(73) Proprietor: G.P.S. S.P.A., I-10040 Lombardore (Turin) (IT)
(72) Inventor: Bellezza Quater, Paolo, I-10077 San Maurizio Canavese, (Turin) (IT); Bellezza Quater, Silvia, I-10077 San Maurizio Canavese, (Turin) (IT); Bellezza Quater, Giorgio, I-10077 San Maurizio Canavese, (Turin) (IT)
(74) Representative: Richter, Werdermann & Gerbaulet

(56) References cited:
- GB-A- 838 827
- GB-A- 883 130
- GB-A- 1 082 380
- GB-A- 1 137 042
- US-A- 4 957 183

## Description

This invention relates to a two-seater vehicle as defined by the features of the preamble of claim 1. Such a two-seater vehicle belongs to the common knowledge in this technical field.

To further develop such a generally known two-seater vehicle this invention aims to provide a compact, limited sized two-seater vehicle with luggage-room, ecological engine, easy mechanical structure, limited productive and working cost.

Therefore, the invention is defined by the features of claim 1.

More specifically, this two-seater vehicle is basically equipped with a non-polluting endothermal engine, such as a GPL fed engine, or an electrical engine with alternator, or equipped with endothermal ecological engine associated to a pneumatic pump for activating one or more hydrostatic engines connected to a pair of rear wheels. Furthermore, the two-seater vehicle includes a hard platform with auxiliary chassis and roll-bar. The body includes a pair of semishells basically hemispherical, articulated at the roll-bar basis and angularly movable around the horizontal and mutual axis in order to offer a comfortable access to the driver's seat, the passenger's seat and to the luggage area.

Here below there are clearer features of the car, which refer to schematic drawings, at variable scale, where:
- Figure 1: is an elevated view on the car side;
- Figure 2: is an axonometric partial and exploded view;
- Figure 3: is a perspective view of directional units connected to front wheels;
- Figure 4: shows positions which can be given to the steering wheel, in compliance with a structural change;
- Figure 5: is a side view showing a preferable profile of the platform supported by wheels and supporting the body.

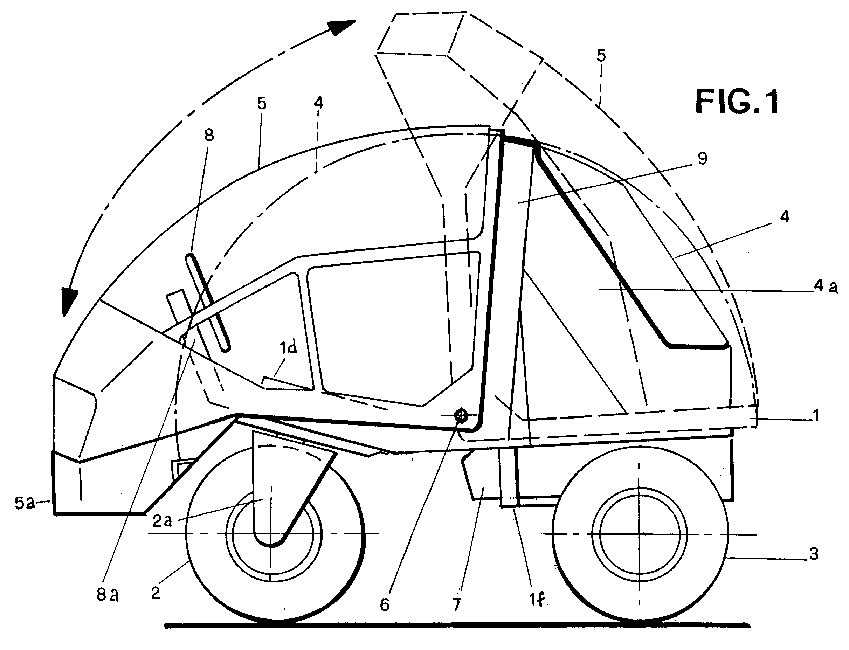

With reference to Figures 1,2,3,5 the sign 1 represents the hard platform, in a single piece, frontally concave in 1a, where pedal controls and driver's and passenger's lower limbs are lodged; part 1a is followed by a part 1b strengthened in 1c, as a support for a pair of seats 1d, Figure 1. The platform is defined at its rear end by a plain part 1e.

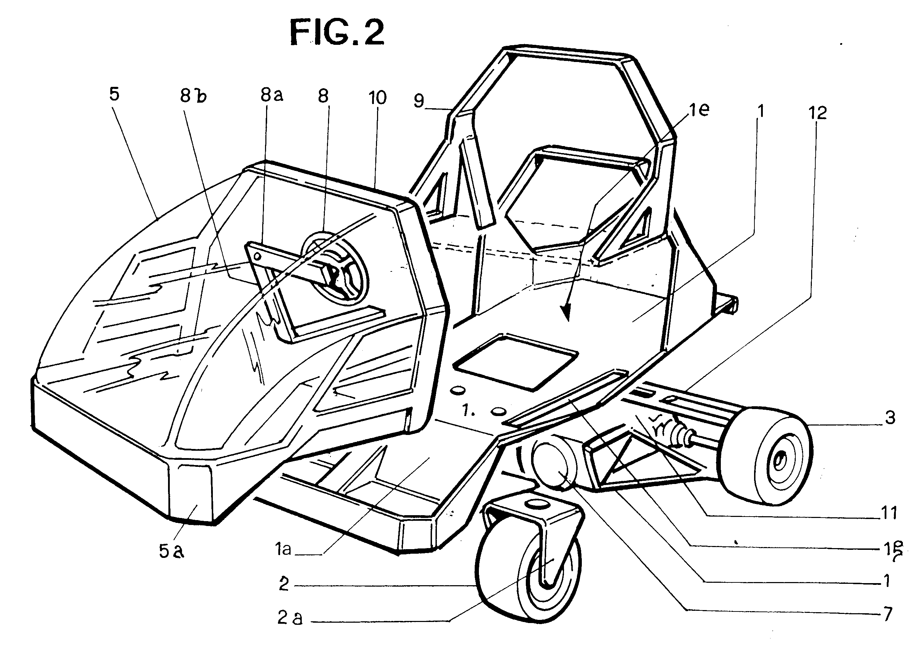

As far as the opposite sides of platform 1 are concerned, ends of a roll-bar 9 are integral and, according to a change, as shown in dotted lines of Figure 2, can advantageously take an annular shape and be integral to the platform for its whole width.

In respect to the roll-bar 9, close to the platform borders, at point 6, Figure 1, median to the platform length, rear semishell 4 and front semishell 5 in transparent substance have a fulcrum. Opposite pivots with a mutual horizontal axis allow the two shells to assume limit positions shown in integral lines and in dotted lines overlapping shell 5 on shell 4 or vice-versa. In compliance to an understandable change (not shown) the rear semishell 4 is hinged on the top of roll-bar 9. Instead, the front semishell 5 is overlappable to the rear semishell 4 when this latter is closed. The rear semishell 4 is also equipped with a door to have access to the car inside without lifting the whole semishell when luggage has to be loaded. Known closing means are supplied to block semishells, equipped with 4a, 5a integral metal or hard frames.

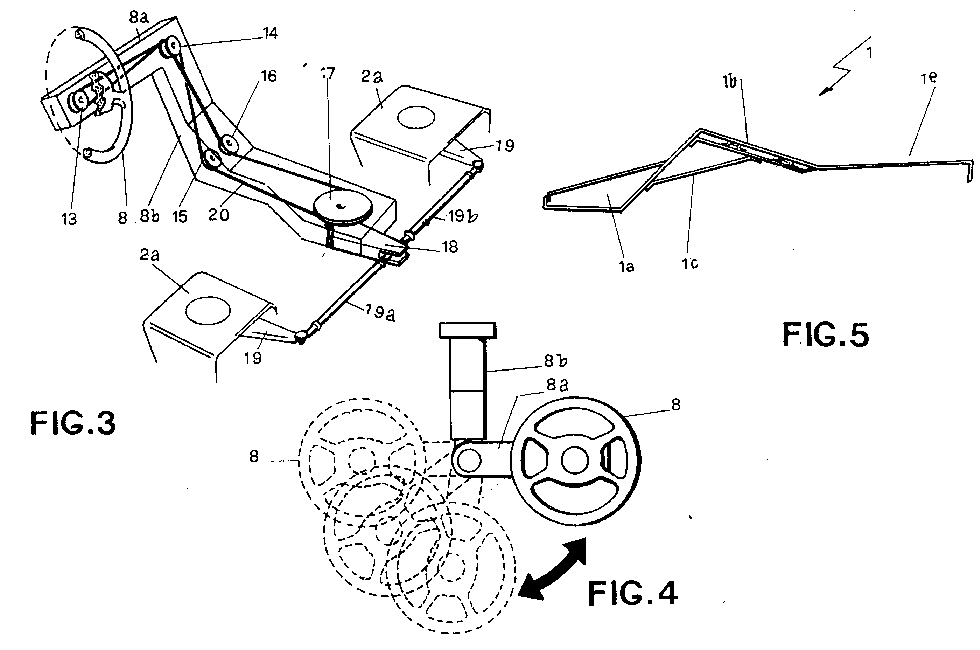

The tyres of the four wheels are low pressured and have a wide cross section. At the front side, the platform 1 is directly supported by a pair of forks of directing wheels 2, equipped with braking device. Forks are linked to the platform through single U-shaped forks 2a with vertical axis. The rotating area of the U-shaped forks 2a for each front wheel 2 is integral to a radial arm 19, Figure 3. Said arms 19 are articulated on the ends of a lever constituted by two tie rods 19a, 19b with faced ends connected to a part 18 through an adjustment joint of virtual cocking of the two tie rods. The part 18 is articulated versus part 8b and is integral to a groove pulley 17. On the groove, in a riding position, there is a cable 20. Said cable is annular and, through return pulleys 15,16,14 with a dual turn, engages a pulley 13 integral to the steering pulley and to the steering wheel 8.

In compliance to a change, the steering wheel 8 is supported to an arm 8a that, as shown at Figure 4, jointly to pulley 14, is pivoted as overturning for 180° versus the part 8b fixed to the vehicle body and completing the directional unit. The parts 8a, 8b form an angular arm. The possibility to overturn the steering wheel position, as shown in Figure 4, besides offering the advantage to implement cars with dual directional controls, gets easier the access to driver's seat and passenger's seat.

With reference to Figure 2, the platform 1, with a strengthening device 1g against possible side impacts, is associated to an auxiliary chassis 1f supporting the engine 7 with a speed gear-differential device, suspensions and transmission units for the driven rear wheels 3.

From the above, eventual structural features of the car can be understood. This car is basically implemented for town traffic, since it has limited sizes, is equipped with simplified mechanics, a magnetic card (optional) for hiring and redelivery park where users coming from outside town can leave their more cumbersome vehicle (and perhaps even more polluting) to take it again after the redelivery of the hired car.

## Claims

1. Two-seater vehicle with limited size, basically used as a vehicle for city traffic, being equipped with:
- a platform (1), a vehicle body having at least one movable element (4, 5) offering access to the seats and to a luggage space, an ecological engine, and four wheels equipped with pressurised tyres,
- said wheels are attached to said platform and include a pair of steered front wheels operable by a steering wheel (8) and a pair of rear wheels driven by said engine,
characterized in that
- said platform (1) includes a roll-bar (9),
- said four tyres are low pressurized tyres and have a wide cross section;
- each of said front wheels is connected to a U-shaped fork (2a) which is pivotally connected to said platform by a vertically oriented axis fixed to the basis of said fork;
- said steering wheel (8) is drivingly connected to said front wheels by means of a funicular device and a steering linkage (19,19a and 19, 19b);
- said rear wheels (3) are connected via a speed gear- differential device to said engine;
- said engine and speed gear-differential are contained in an auxiliary chassis (1f) fixed to said platform;
- said movable element is constituted by a pair of semishells (4,5), basically hemispherical, which are transversally articulated at said platform at about half of its length so that one semishell is turnable about 180° overlapping with respect to the other semishell;
- one of said semishells is turnable to the rear of the vehicle giving access to the seats and the other is turnable to the front of the vehicle giving access to said luggage space.

2. Two-seater vehicle as claimed in claim 1, wherein said steering wheel (8) is applied to one end of an angular arm (8a, 8b) which is fixed to the vehicle body, said angular arm carries transmission elements of said funicular device.

3. Two-seater vehicle as claimed in claim 1, wherein said steering wheel (8) is applied to one end of an arm (8a) which is articulated to an arm (8b) fixed to the vehicle body, said arms carry transmission elements of said funicular device.

4. Two-seater vehicle as claimed in claim 2 or 3, wherein said funicular device comprises an annular cable (20) drivingly engaging associated pulleys, whereby one pulley (13) is connected to said steering wheel (8) and another pulley (17) is drivingly connected to a part (18) articulated to the arm fixed to the vehicle body; said part (18) is articulated by an adjustment joint to two levers (19a, 19b) of said steering linkage, whereby each lever (19a, 19b) is articulated to an associated radial arm (19), which is integral to the pivotal part of said U-shaped fork (2a) supporting a respective front wheel (2).

5. Two-seater vehicle as claimed in claims 1 to 4, whereby said rear semishell (4) is articulated on the top of said roll-bar (9), and whereby said front semishell (5) is overturnable on the rear semishell.

## Patentansprüche

1. Zweisitzer-Wagen begrenzter Größe, grundsätzlich als Wagen für Stadtfahrten verwendet, ausgestattet mit:
- einer Plattform (1), einem Wagenkörper mit mindestens einem beweglichen Teil (4, 5), der den Zugang zu den Sitzen und einem Kofferraum ermöglicht, einem umweltfreundlichen Motor und vier Rädern, die mit Druckluftreifen versehen sind,
- diese Räder sind an der genannten Plattform befestigt und umfassen ein Paar gelenkter Vorderräder, die mit einem Lenkrad (8) betätigt werden können, und ein Paar Hinterräder, die vom genannten Motor angetrieben werden,
dadurch gekennzeichnet, daß
- die Plattform (1) einen Überrollbügel (9) umfaßt,
- die vier Reifen Niederdruckreifen sind und einen breiten Querschnitt haben,
- jedes der Vorderräder mit einer U-förmigen Gabel (2a) verbunden ist, die durch eine vertikale Achse schwenkbar mit der Plattform verbunden ist, die an der Basis der Gabel befestigt ist,
- das Lenkrad (8) mittels einer Seilzugvorrichtung und eines Lenkgestänges (19, 19a und 19, 19b) antreibend mit den Vorderrädern verbunden ist,
- die Hinterräder (3) über eine Übersetzungsgetriebe-Differential-Vorrichtung mit dem Motor verbunden sind,
- der Motor und das Übersetzungsgetriebe-Differential in einem zusätzlichen Chassis (1f) enthalten sind, das an der Plattform befestigt ist,
- der bewegliche Teil aus einem im wesentlichen halbkugelförmigen Paar Halbschalen (4, 5) besteht, die an die Plattform ungefähr in der Hälfte ihrer Länge quer angelenkt sind, derart, daß eine Halbschale sich mit der anderen Halbschale überlappend um 180° drehbar ist,
- eine der Halbschalen ist zum Heck des Wagens drehbar, um den Zugang zu den Sitzen zu ermöglichen, und die andere ist zum Vorderteil des Wagens drehbar, um den Zugang zum Kofferraum freizugeben.

2. Zweisitzer-Wagen nach Patentanspruch 1, bei dem das Lenkrad (8) an einem Ende eines abgewinkelten Armes (8a, 8b) angeordnet ist, der am Wagenkörper befestigt ist und Getriebeteile der Seilzugvorrichtung trägt.

3. Zweisitzer-Wagen nach Patentanspruch 1, bei dem das Lenkrad (8) an einem Ende eines Armes (8a) angeordnet ist, der an einen Arm (8b) angelenkt ist, der am Wagenkörper befestigt ist, wobei diese Arme Übertragungsmittel der Seilzugvorrichtung tragen.

4. Zweisitzer-Wagen nach Patentanspruch 2 oder 3, bei dem die Seilzugvorrichtung ein ringförmiges Drahtseil (20) umfaßt, das mit zugehörigen Riemenscheiben diese antreibend in Eingriff steht, wobei eine Riemenscheibe (13) mit dem Lenkrad (8) verbunden ist und eine andere Riemenscheibe (17) mit einem Teil (18) dieses antreibend verbunden ist, das an den Arm angelenkt ist, der am Wagenkörper befestigt ist; dieses Teil (18) ist durch ein Einstellgelenk an zwei Hebel (19a, 19b) des Lenkgestänges angelenkt, wobei jeder Hebel (19a, 19b) an einen zugehörigen Radialarm (19) angelenkt ist, der in den schwenkbaren Teil der U-förmigen Gabel (2a) integriert ist, die ein zugehöriges Vorderrad (2) trägt.

5. Zweisitzer-Wagen nach Patentanspruch 1 bis 4, bei dem die hintere Halbschale (4) im oberen Bereich an den Überrollbügel (9) angelenkt ist und bei dem die vordere Halbschale (5) über die hintere Halbschale gedreht werden kann.

## Revendications

1. Voiture à deux places de taille limitée, précisément utilisée comme voiture pour trajets en ville, étant équipée :
- d'une plateforme (1), un corps de véhicule ayant au moins un élément mobile (4, 5) offrant l'accès aux sièges et à un espace à bagages, un moteur écologique et quatre roues équipées de pneus sous pression,
- lesdites roues sont attachées à ladite plateforme et comprennent une paire de roues avant dirigées pouvant fonctionner à l'aide d'un volant de direction (8) et une paire de roues arrière entraînées par ledit moteur,
caractérisée en ce que
- ladite plateforme (1) comprend un arceau de sécurité (9),
- lesdits quatre pneus sont des pneus à basse pression et ont une section transversale large ;
- chacune desdites roues avant est reliée à une fourche en forme d'U (2a) qui est reliée en connexion à ladite plateforme par un axe orienté verticalement, fixé à la base de ladite fourche ;
- ledit volant de direction (8) est relié en entraînement aux roues avant au moyen d'un dispositif funiculaire et d'organes de direction assemblés (19, 19a et 19, 19b);
- lesdites roues arrière (3) sont reliées par une boîte de vitesses - un dispositif différentel audit moteur ;
- ledit moteur et la boîte de vitesses - différentiel sont contenus dans un châssis auxiliaire (1f) fixé à ladite plateforme ;
- ledit élément mobile est constitué par une paire de demi coques (4, 5), fondamentalement hémisphériques, qui sont articulées transversalement à ladite plateforme à environ la moitié de sa longueur si bien qu'une demi coque est rotative de 180° en se chevauchant par rapport à l'autre demi coque ;
- l'une desdites demi coques peut être tournée vers l'arrière du véhicule en donnant l'accès aux sièges et l'autre peut être tournée vers l'avant du véhicule en donnant l'accès audit espace à bagages.

2. Voiture à deux places selon la revendication 1, dans laquelle ledit volant de direction (8) est appliqué à une extrémité d'un bras angulaire (8a, 8b) qui est fixé au corps du véhicule, ledit bras angulaire portant les éléments de transmission dudit dispositif funiculaire.

3. Voiture à deux places selon la revendication 1, dans laquelle ledit volant de direction (8) est appliqué à une extrémité d'un bras (8a) qui est articulé sur un bras (8b) fixé au corps du véhicule, lesdits bras portant les éléments de transmission dudit dispositif funiculaire.

4. Voiture à deux places selon la revendication 2 ou 3, dans laquelle ledit dispositif funiculaire comprend un câble annulaire (20) accouplant en entraînement des poulies associées, une poulie (13) étant reliée audit volant de direction (8) et une autre poulie (17) étant reliée en entraînement à une partie (18) articulée au bras fixé au corps du véhicule, ladite partie (18) étant articulée par un joint de réglage à deux leviers (19a, 19b) desdits organes de direction assemblés, chaque levier (19a, 19b) étant articulé sur un bras radial associé (19) qui est une partie intégrante de la partie pivotante de ladite fourche en forme d'U (2a) qui porte respectivement une roue avant (2).

5. Voiture à deux places selon les revendications 1 à 4, ladite demi coque arrière (4) étant articulée sur le dessus dudit arceau de sécurité (9) et ladite demi coque avant (5) pouvant être renversée sur la demi coque arrière.
